Europäisches Patentamt

European Patent Office

Office européen des brevets

(11) Veröffentlichungsnummer : **0 177 880**
**B1**

(12) # EUROPÄISCHE PATENTSCHRIFT

(45) Veröffentlichungstag der Patentschrift :
02.03.88

(51) Int. Cl.⁴ : **F 15 B 15/08**

(21) Anmeldenummer : **85112403.2**

(22) Anmeldetag : **01.10.85**

(54) **Linearantrieb.**

(30) Priorität : **09.10.84 DE 3436977**

(43) Veröffentlichungstag der Anmeldung :
**16.04.86 Patentblatt 86/16**

(45) Bekanntmachung des Hinweises auf die Patenterteilung : **02.03.88 Patentblatt 88/09**

(84) Benannte Vertragsstaaten :
**BE CH FR GB IT LI NL SE**

(56) Entgegenhaltungen :
**DE-A- 2 404 244**
**DE-A- 3 229 305**
**DE-C- 3 124 878**

(73) Patentinhaber : **GAS Gesellschaft für Antriebs- und Steuerungstechnik mbH & Co.KG**
**Leopoldstrasse 1**
**D-7742 St. Georgen (DE)**

(72) Erfinder : **Goedecke, Wolf-Dieter, Dr.**
**Bachweg 12**
**D-7731 Unterkirnach (DE)**
Erfinder : **Schwenzer, Reinhard, Dr.**
**Rossstrasse 78**
**D-4000 Düsseldorf 30 (DE)**
Erfinder : **Huber, Ralf**
**Hauptstrasse 33**
**D-7734 Brigachtal (DE)**

(74) Vertreter : **Witte, Alexander, Dr.-Ing.**
**Schickhardtstrasse 24**
**D-7000 Stuttgart 1 (DE)**

EP 0 177 880 B1

**Beschreibung**

Die Erfindung betrifft einen Linearantrieb mit einem sich entlang einer Längsachse erstreckenden Antriebsprofil, einem auf diesem laufenden Schlitten und Antriebsmitteln, die eine Relativbewegung zwischen Antriebsprofil und Schlitten in Achsrichtung bewirken, wobei der Schlitten auf dem Antriebsprofil mittels einer Längs-Wälzlagerung läuft, bei der sich die Drehachsen der Wälzmittel quer zur Längsachse des Linearantriebes erstrecken und das Antriebsprofil sich in Längsrichtung des Linearantriebes erstreckende Laufbahnen für die Wälzmittel aufweist. Ein Linearantrieb der vorstehend genannten Art ist aus der DE-A-24 04 244 bekannt.

Linearantriebe dieser Art sind beispielsweise aus der Handhabungstechnik bekannt. Sie werden dort in Form sog. Linear- oder Portaleinheiten verwendet, bei denen sich jeweils ein Element entlang einer geraden Achse gegenüber einem anderen Element bewegt, und zwar unter der Kraft eines hydraulischen oder pneumatischen Druckmediums oder auch eines elektrischen oder magnetischen Antriebes. Die Einheiten können als sog. Basiseinheit ausgebildet sein, von der weitere Linear- oder auch Dreheinheiten ausgehen, sie können aber auch bei anderen Ausführungsformen beliebig nach Art eines Baukastens zusammengesetzt werden, um Bewegungen eines Handhabungsgerätes entlang nahezu beliebiger Achsen vollführen zu können. Am freien Ende des aus mehreren derartigen Einheiten zusammengesetzten Armes befindet sich in der Regel ein Greifarm oder ein Werkzeug, mit dem eine Transport- oder Montageaufgabe entlang eines bestimmten Bewegungsweges ausgeführt werden kann.

Bekannte Linearantriebe der eingangs genannten Art sind so ausgebildet, daß das Antriebsprofil in radialer Richtung einen etwa rechteckförmigen Querschnitt aufweist, der Schlitten mit einer entsprechenden Durchlaßöffnung versehen ist und demzufolge das Antriebsprofil allseitig umfaßt. Das Antriebsprofil ist im Bereich seiner Längswände mit gehärteten und geschliffenen Führungsprofilen versehen und der Schlitten weist an entsprechend zugehörigen Positionen Rollen auf, so daß die Relativbewegung zwischen Antriebsprofil und Schlitten mittels dieser Längs-Rollenlagerung leicht möglich ist.

Von den Anwendern derartiger Handhabungsgeräte werden jedoch in zunehmendem Maße einander widerstreitende Forderungen erhoben. Einerseits sollen die Handhabungsgeräte nämlich möglichst geringe Außenabmessungen und Gewichte aufweisen, andererseits sollen aber von den Elementen des Handhabungsgerätes immer größere Lasten aufgenommen werden können.

Aus der DE-A-32 29 305 ist ein Linearantrieb bekannt, der ein zylindrisches Antriebsprofil mit zwei radial abstehenden Profilteilen aufweist. Die Profilteile schließen zwischen sich eine keilförmige Öffnung ein, in die ein Bremsklotz mit keilförmig angeordneten Bremsbelägen einführbar ist. Die jeweils andere Seite der Profilteile ruht auf Rädern mit zur Längsachse des Linearantriebes senkrechter Drehachse. Aufgrund der Tatsache, daß bei diesem bekannten Linearantrieb der Schlitten das zylindrische Antriebsprofil nahezu über den gesamten Umfang, jedenfalls über weit mehr als die Hälfte des Umfanges formschlüssig umgreift, folgt, daß die Räder, die an den Rückseiten der Profilteile anliegen, nicht zur Längsführung des Antriebsprofils dienen können, weil ein solches System überbestimmt wäre. Die Räder dienen vielmehr ausschließlich als Verdrehsicherung des in der hohlzylindrischen Aufnahme des Schlittens um die Längsachse geringfügig verdrehbaren Antriebsprofils, sie dienen ferner als Widerlager gegen die Wirkung der Bremse.

Aus der DE-C-31 24 878 ist noch ein im wesentlichen zylindrisches Antriebsprofil bekannt, das oben und unten in einen rechteckförmigen Bereich ausläuft. An den Seiten des rechteckförmigen Bereichs sind dreieckförmige Längsnuten vorgesehen, in denen keilförmige Gleitstücke eines Schlittens formschlüssig gleiten. Der Schlitten hat im radialen Querschnitt im wesentlichen U-förmige Gestalt, wobei die keilförmigen Gleitstücke an den seitlichen Flanschen des Profils einander gegenüber angeordnet sind. Aus dem mittleren Grundflansch des Profils des Schlittens erstreckt sich noch ein radialer Fortsatz mit einem zylindrischen Körper, der in einer zylindrischen Längsbohrung des Antriebsprofils verschiebbar ist.

Auch dieser bekannte Linearantrieb hat den Nachteil, daß er in sehr massiver und schwerer Weise ausgebildet ist.

Der Erfindung liegt daher die Aufgabe zugrunde, einen Servo-Linearantrieb der eingangs genannten Art dahingehend weiterzubilden, daß bei geringeren oder zumindest gleichen Außenabmessungen das Gewicht vermindert und die übertragbaren Lasten erhöht werden.

Diese Aufgabe wird erfindungsgemäß dadurch gelöst, daß das Antriebsprofil einen radialen Querschnitt aufweist, bei dem von einem mittleren Bereich flanschartige Endbereiche sternförmig abstehen, die mit näherungsweise radial verlaufenden Oberflächenabschnitten versehen sind, an deren Oberfläche die Laufbahnen ausgebildet sind.

Die Erfindung löst damit die zugrundeliegende Aufgabe vollkommen, weil ein Antriebsprofil mit der zuvor genannten Querschnittsform sowohl hinsichtlich Torsionsmoment, Biegemoment wie auch Querkraft bessere mechanische Eigenschaften aufweist als die bekannten Antriebsprofile mit Rechteckquerschnitt.

Bei einem bevorzugten Ausführungsbeispiel der Erfindung weist das Antriebsprofil näherungsweise X-förmige Gestalt auf. Die Abschnitte verlaufen dabei vorzugsweise um etwa 90° zueinander.

Diese Ausführungsformen der Erfindung haben den Vorteil, daß bei einem X-förmigen Profil vier symmetrisch zueinander angeordnete Wälzlagerungen realisiert werden können. Außerdem hat sich gezeigt, daß ein solches Antriebsprofil z. B. ein etwa 8 mal größeres Torsionsmoment, ein 2,2 mal größeres Biegemoment und eine 2,7 mal größere Querkraft aufweist, als dies bei herkömmlichen Antriebsprofilen mit rechteckigem Querschnitt der Fall war.

Bei einer weiteren Ausführungsform der Erfindung sind die Abschnitte mit gehärteten Führungsleisten als Laufbahnen für die Wälzmittel versehen. Der Schlitten weist dabei Rollen auf, deren Drehachsen parallel zu den Führungsleisten verlaufen.

Diese an sich bekannte Anordnung hat sich im praktischen Einsatz bewährt, wenn die Führungsleisten geschliffen und gehärtet sind, es versteht sich jedoch, daß in kinematischer Umkehr auch mit gleichen Vorteilen die Führungsleisten am Schlitten und die Rollen entsprechend am Antriebsprofil angeordnet sein können. Auch Gleitlager können verwendet werden.

Bei einer anderen Ausgestaltung der Erfindung ist der Schlitten mit einer der radialen Querschnittsform des Antriebsprofils entsprechenden Durchlaßöffnung versehen, wie dies ebenfalls an sich bekannt ist.

Ein weiteres Ausführungsbeispiel der Erfindung zeichnet sich dadurch aus, daß im mittleren Bereich des Antriebsprofiles vorzugsweise ein zylindrisches Rohr aus Edelstahl aus glasfaserverstärktem oder kohlefaserverstärktem Kunststoff oder dergleichen axial angeordnet ist.

Diese Ausführungsform hat den Vorteil, daß im zylindrischen Rohr in an sich bekannter Weise ein Kolben laufen kann, der entweder mit Kolbenstange oder kolbenstangenlos ausgebildet ist. Die Verwendung eines Edelstahlrohres oder eines Kunststoffrohres einer der genannten Arten hat dabei den Vorteil, daß die Maßhaltigkeit, insbesondere die Innenoberfläche der Rohre durch Verwendung von handelsüblichen Halbzeugen garantiert werden kann, ohne daß es bei diesem, eine sehr hohe Paßgenauigeit erfordernden Element einer schwierigen und damit teuren Bearbeitung des Antriebsprofiles bedarf. Es genügt vielmehr, für eine gut ausgerichtete Positionierung des Rohres zu sorgen, während die Paß- und Laufeigenschaften des Kolbens durch die Oberflächenqualität des fertigen Halbzeuges gewährleistet werden.

Ein anderes Ausführungsbeispiel der Erfindung weist im Antriebsprofil axial verlaufende, weitere Bohrungen bzw. Rohre zum Durchführen von elektrischen Leitungen oder Druckmedien auf.

Diese Ausführungsform der Erfindung hat den Vorteil, daß im Rohr des Antriebsprofiles ein doppelt wirkender Zylinder vorgesehen werden kann, d. h. ein Zylinder, der von beiden Seiten mit Druckmedium beaufschlagt wird, gleichzeitig aber alle elektrischen Anschlüsse und Druckanschlüsse nur an einer Seite des Antriebsprofiles vorgesehen zu werden brauchen, weil die Verteilung zur anderen Seite hin über die genannten weiteren Bohrungen bzw. Rohre vorgenommen werden kann. Außerdem können an einer Seite des Antriebsprofiles zugeführtes Druckmedium oder elektrische Steuersignale auch einem weiteren Antrieb oder Werkzeug zugeführt werden, der an der anderen Seite angeflanscht ist.

Damit kann die Kompaktheit des erfindungsgemäßen Linearantriebes weiter erhöht und die dynamischen Eigenschaften verbessert werden, weil durch die sehr kurze Leitungsführung für das Druckmedium nur geringe Totvolumina auftreten.

Bei einem weiteren Ausführungsbeispiel der Erfindung weist das Antriebsprofil einen Mantel aus glasfaserverstärktem oder kohlefaserverstärktem Kunststoff auf, dessen von Einbauten freier Innenraum mit einem Kunststoffschaum ausgefüllt und/oder mit radialen Zwischenstegen versehen ist.

Bei dieser Ausführungsform der Erfindung ergibt sich eine weitere erhebliche Gewichtsreduzierung, weil alle diejenigen Teile, die nicht zum mechanischen Führen erforderlich sind, aus sehr leichem Kunststoff hergestellt sind. Gleichwohl weist auch das Antriebsprofil dieses Ausführungsbeispieles infolge der gewählten radialen Querschnittsform eine hohe mechanische Belastbarkeit auf, die für Bestückungs- und Montagearbeiten ausreicht. Die drastische Gewichtsverminderung bei diesem Ausführungsbeispiel erlaubt insbesondere eine hohe Bewegungsgeschwindigkeit des Linearantriebes und damit auch des gesamten Handhabungsgerätes, so daß sich vorteilhafte Wirkungen für solche Aufgaben einstellen, bei denen hohe Geschwindigkeiten im Vordergrund stehen.

Bei einem anderen Ausführungsbeispiel der Erfindung ist das Antriebsprofil mit einer seitlichen Ausnehmung versehen, in der ein Element einer Längenmeßeinrichtung angeordnet ist, das mit einem weiteren, am Schlitten angeordneten Element zusammenwirkt. Insbesondere ist in der Ausnehmung z. B. ein linearer Glas-Meßstab und am Schlitten eine den Maßstab vorzugsweise gabelartig umfassende optische Meßeinheit angeordnet. Alternativ kann auch ein Potentiometer oder ein induktiver Wegaufnehmer Verwendung finden.

Bei dieser Ausführungsform der Erfindung ist die Längenmeßeinrichtung demzufolge voll integriert und steht nicht seitlich vor, so daß sie auch nicht versehentlich beschädigt werden kann. Sie ist darüber hinaus in besonderem Maße gegenüber Umwelteinflüssen geschützt, beispielsweise gegenüber Verschmutzung. Zusätzlich hat die versenkte Anordnung der Meßeinrichtung aber auch den Vorteil, daß eine optische Meßeinheit dort besonders störungsfrei arbeiten kann, weil bei der versenkten Anordnung keine Störungen durch Streulicht o. dgl. zu befürchten sind.

Bei einem Ausführungsbeispiel der Erfindung ist die Ausnehmung mit einer jalousieartigen Abdeckung versehen, die sich beidseitig vom Schlitten erstreckt und von diesem mitgenommen wird.

Diese Maßnahme hat den Vorteil, daß die Ausnehmung mit der Längenmeßeinrichtung hermetisch abgeschlossen ist.

Ein anderes Ausführungsbeispiel der Erfindung zeichnet sich durch eine Oberfläche des Antriebsprofiles aus, die mit einer Bremse des Schlittens zusammenwirkt. Insbesondere kann es sich dabei um eine Oberfläche handeln, die eben ausgebildet ist und zwei Endbereiche peripher verbindet.

Diese Ausführungsform der Erfindung hat u. a. den Vorteil, daß der größte Teil der Linearbewegung mit hoher Geschwindigkeit durchmessen werden kann, weil am Ende der Bewegung eine Bremse wirksam wird, welche die Relativbewegung an einer vorgegebenen Position beendet. Damit sind höhere Verfahrgeschwindigkeiten erzielbar, als dies bei bremsenlosen Antrieben der Fall ist, bei denen die Geschwindigkeit nicht zu hoch gewählt werden darf, um ein Überfahren der Sollposition oder ein Pendeln um die Sollposition zu vermeiden. Auch eine Notbremsung ist möglich, ebenso wie eine stabile Haltefunktion durch die Bremse dargestellt werden kann.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen :

Fig. 1 eine Prinzipdarstellung eines Ausführungsbeispieles eines erfindungsgemäßen Servo-Linearantriebes mit kolbenstangenlosem Antrieb ;

Fig. 2 eine radiale Schnittdarstellung eines erfindungsgemäßen Linearantriebes mit zahlreichen Einzelheiten ;

Fig. 3 eine Draufsicht der Anordnung gemäß Fig. 2 ;

Fig. 4 eine radiale Schnittdarstellung eines weiteren Ausführungsbeispieles eines erfindungsgemäßen Antriebsprofiles.

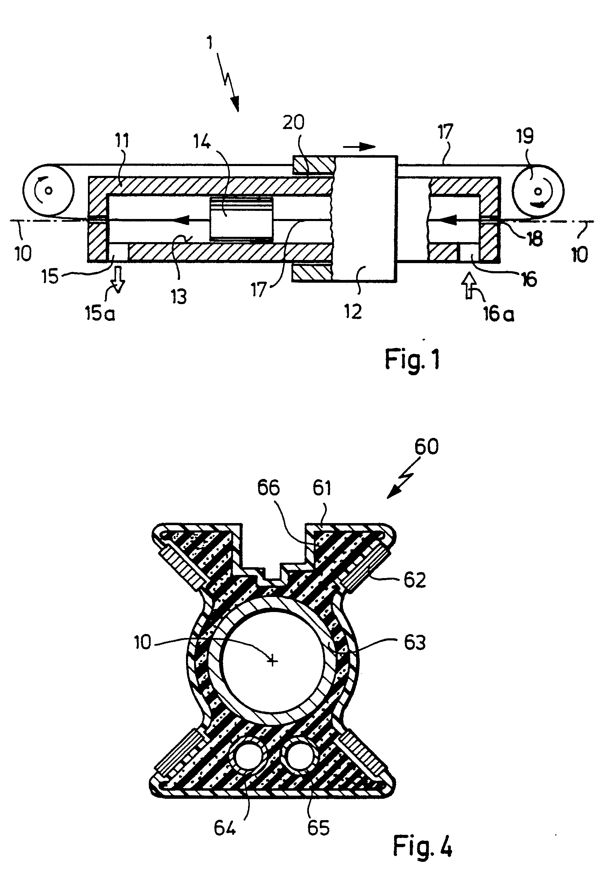

In Fig. 1 ist mit 1 als Ganzes ein pneumatischer Linearantrieb bezeichnet, der eine Bewegung entlang einer Längsachse 10 zu durchfahren gestattet. Hierzu ist auf einem Antriebsprofil 11 ein Schlitten 12 verschiebbar angeordnet. Durch das Antriebsprofil 11 erstreckt sich eine axiale Zylinderbohrung 13, in der ein Kolben 14 läuft. An beiden Längsenden der Zylinderbohrung 13 und damit zu beiden Seiten des Kolbens 14 befinden sich Öffnungen 15, 16, die beispielsweise in den eingezeichneten Richtungen 15a und 16a mit einem Druckmedium beaufschlagt werden können, üblicherweise mit Druckluft oder einer Hydraulikflüssigkeit. Der Kolben 14 läuft kolbenstangenlos. Er ist beidseitig in ein Seil 17 oder Band eingespannt, das durch druckdichte Durchführungen 18 in den Stirnseiten des Antriebsprofiles 11 läuft, dort über Umlenkrollen 19 umgelenkt wird und schließlich mit dem Schlitten 12 verbunden ist.

Leitet man das Druckmedium entlang den mit 15a und 16a bezeichneten Pfeilen in die Zylinderbohrung 13 ein, bewegt sich der Kolben 14 nach links, die rechte Umlenkrolle 19 dreht sich um Uhrzeigersinne und der Schlitten 12 bewegt sich nach rechts. Durch diese gegenläufige Bewegung von Kolben 14 und Schlitten 12 kann die gesamte, durch die Länge der Zylinderbohrung 13 gegebene Verfahrlänge des Linearantriebes 1 durchmessen werden.

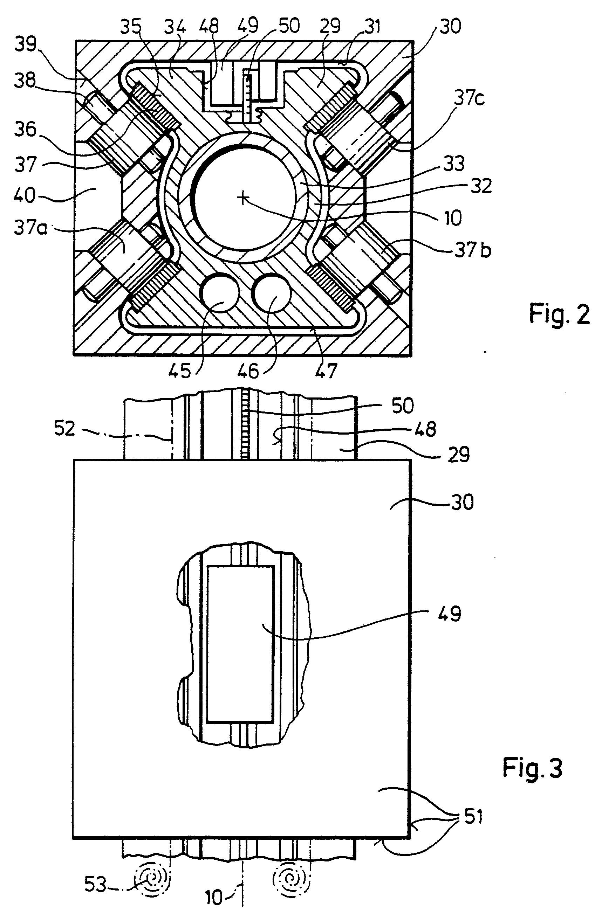

Einzelheiten der radialen Formgebung von Antriebsprofil 11 und Schlitten 12 sowie der zwischen diesen Elementen wirksamen Führung 20 werden nun nachstehend anhand der radialen Schnittdarstellung von Fig. 2 und der Draufsicht von Fig. 3 näher erläutert :

In Fig. 2 läuft auf einem Antriebsprofil 29 ein Schlitten 30. Hierzu ist dieser mit einer Durchlaßöffnung 31 versehen, dessen radiale Querschnittsform derjenigen des Antriebsprofiles 29 entspricht.

Das Antriebsprofil 29 weist einen mittleren, im Ausführungsbeispiel zylindrischen Bereich 32 auf, in dem sich koaxial zur Längsachse 10 ein zylindrisches Rohr 33 erstreckt. An den mittleren Bereich 32 schließen sich vier sternförmig abstehende flanschartige Endbereiche 34 an, so daß der gesamte radiale Querschnitt des Antriebsprofiles 29 und damit auch der Durchlaßöffnung 31 näherungsweise einem X entspricht.

Die flanschartigen Endbereiche 34 weisen nach innen geneigte Abschnitte 35 auf, die axial verlaufende Führungsleisten 36 tragen. Die Führungsleisten 36 sind z. B. etwa jeweils um 90° gegeneinander versetzt und verlaufen ungefähr radial bezüglich der Längsachse 10.

Den Führungsleisten 36 gegenüber sind im Schlitten 30 Rollen 37 angeordnet, deren Drehachsen 38 parallel zu den Führungsleisten 36, und zwar parallel zu einer radialen Richtung bezüglich der Längsachse 10, verlaufen. Die Drehachsen 38 sind in der praktischen Ausführungsform als Stifte ausgebildet, die in Bohrungen 39 laufen. Auf einander gegenüberliegenden Seitenflächen des im wesentlichen im radialen Querschnitt von außen quadratischen Schlittens 30 sind trapezförmige Ausnehmungen 40 angebracht, deren schräge Seitenflächen in taschenartige Hohlräume übergehen. In diese Hohlräume können die Rollen 37, 37a, 37b, 37c seitlich eingeschoben und dann durch Einstecken der Stifte in die Bohrungen 39 fixiert werden.

Es ist selbstverständlich auch möglich, die für die Längs-Wälzlagerung zwischen Antriebsprofil 29 und Schlitten 30 dienenden Elemente 36, 37 und 38 mit Justiereinrichtungen zu versehen, um eventuelle Montagefehler durch Nachjustieren kompensieren zu können.

Man erkennt aus Fig. 2 weiter, daß zusätzlich zum zentralen zylindrischen Rohr 33, in dem beispielsweise ein Kolben 14 gemäß Fig. 1 laufen kann, noch zwei weitere Längsbohrungen 45, 46 vorgesehen sind, von denen eine auch als Längsschlitz ausgebildet sein kann. Eine dieser Bohrungen kann beispielsweise als Leitung für ein Druckmedium dienen, während die andere Bohrung bzw. der Längsschlitz elektrische Kabel beherbergt. Über die Längsbohrungen 45, 46 können mithin beide Stirnseiten des Antriebsprofiles 29 miteinander verbunden werden, so daß Steuer- oder Anschlußelemente nur an einer Stirnseie des Antriebsprofiles 29 angeordnet zu werden brauchen.

Die Unterseite des Antriebsprofiles 29 ist als ebene Fläche 47 ausgebildet, welche zwei Endbereiche 34 peripher verbindet. Die Fläche 47 kann als Bremsfläche für eine in der Figur nicht dargestellte Bremse dienen, die zwischen Schlitten 30 und Antriebsprofil 29 wirkt.

Aus Fig. 2 und 3 erkennt man weiter, daß das Antriebsprofil 29 an seiner Oberseite mit einer Ausnehmung 48 versehen ist, die eine am Schlitten 30 angeordnete Meßeinheit 49 aufnimmt. Die Meßeinheit 49 ist beispielsweise eine gabelförmige Lichtschranke, zwischen der sich ein Meßstab 50, insbesondere ein Glasmeßstab, hindurchbewegt. Bei dieser Bewegung laufen beispielsweise auf dem Meßstab 50 angebrachte Strichmarkierungen an der Lichtschranke vorbei und erzeugen in der Meßeinheit 49 Impulse. Durch Inkrementieren und Dekrementieren dieser Impulse läßt sich eine präzise Lagenerkennung realisieren und damit ein vorgegebener Weg durchmessen.

Oberhalb der Ausnehmung 48 kann eine jalousieartige Abdeckung 52 vorgesehen sein, die z. B. an ihren Längsenden 53 aufwickelbar ist. Die Abdeckung 52 ist beidseitig am Schlitten 30 befestigt, der somit ein Fenster der Abdeckung 52 bildet, durch das die Meßeinheit 49 in die Ausnehmung 48 reicht. Die Ausnehmung 48 ist dadurch hermetisch verschlossen, weil der Schlitten 30 die Abdeckung 52 bei seiner Bewegung mitnimmt und an den Enden 53 entsprechend auf- bzw. abrollt.

Schließlich können Seitenflächen 51 des Schlittens 30 noch in an sich bekannter Weise mit Gewinden, Gewindebohrungen, Flanschen u. dgl. versehen sein, an denen weitere Servoantriebe, seien es Linearantriebe oder Drehantriebe, befestigt sein können.

Beim Ausführungsbeispiel gemäß Fig. 4 weist das dargestellte Antriebsprofil 60 dieselbe radiale Querschnittsform auf wie das Antriebsprofil 29 in Fig. 2. Lediglich der mechanische Aufbau des Antriebsprofiles 60 unterscheidet sich vom Ausführungsbeispiel gemäß Fig. 2 insofern, als nun ein Mantel 61 aus Kunststoff vorgesehen ist, insbesondere einem kohlefaserverstärkten oder einem glasfaserverstärkten Kunststoff. An den Mantel 61 sind in der bereits aus Fig. 2 ersichtlichen Weise Führungsleisten 62 angeformt, die mit einem Schlitten zusammenarbeiten, wie er ebenfalls in seinen Einzelheiten Fig. 2 zu entnehmen ist.

Der vom Mantel 61 umschlossene Hohlraum, der nicht von einem zentralen Rohr 63 oder weiteren Rohren 64, 65 ausgefüllt ist, ist mit einem Kunststoffschaum 66, beispielsweise einem Polyurethan, ausgeschäumt. Alternativ oder zusätzlich können Querstege im Hohlraum angeordnet sein.

Die Rohre 63 bis 65 beim Ausführungsbeispiel gemäß Fig. 4 können ebenfalls aus einem kohlefaserverstärkten oder glasfaserverstärkten Kunststoff bestehen, um das Gewicht des Antriebsprofiles 60 weiter zu reduzieren.

## Patentansprüche

1. Linearantrieb mit einem sich entlang einer Längsachse (10) erstreckenden Antriebsprofil (11 ; 29 ; 60), einem auf diesem laufenden Schlitten (12 ; 30) und Antriebsmitteln (14, 17, 19), die eine Relativbewegung zwischen Antriebsprofil (11 ; 29 ; 60) und Schlitten (12 ; 30) in Achsrichtung bewirken, wobei der Schlitten (12 ; 30) auf dem Antriebsprofil (11 ; 29 ; 60) mittels einer Längs-Wälzlagerung läuft, bei der sich die Drehachsen (38) der Wälzmittel (37, 37a, 37b, 37c) quer zur Längsachse (10) des Linearantriebes (1) erstrecken und das Antriebsprofil (11 ; 29 ; 60) sich in Längsrichtung des Linearantriebes (1) erstreckende Laufbahnen für die Wälzmittel aufweist, dadurch gekennzeichnet, daß das Antriebsprofil (29 ; 60) einen radialen Querschnitt aufweist, bei dem von einem mittleren Bereich (32) flanschartige Endbereiche (34) sternförmig abstehen, die mit näherungsweise radial verlaufenden Abschnitten (35) versehen sind, an deren Oberfläche die Laufbahnen ausgebildet sind.

2. Antrieb nach Anspruch 1, dadurch gekennzeichnet, daß das Antriebsprofil (29 ; 60) näherungsweise X-förmige Gestalt aufweist.

3. Antrieb nach Anspruch 2, dadurch gekennzeichnet, daß die Abschnitte (35) um etwa 90° zueinander versetzt verlaufen.

4. Antrieb nach einem der Ansprüche 1 bis 3, dadurch gekennzeichnet, daß die Abschnitte (35) mit gehärteten Führungsleisten (36 ; 62) als Laufbahnen für die Wälzmittel (37, 37a, 37b, 37c) versehen sind.

5. Antrieb nach Anspruch 4, dadurch gekennzeichnet, daß der Schlitten (30) mit Rollen (37, 37a bis 37c) versehen ist, deren Drehachsen (38) parallel zu den Führungsleisten (36 ; 62) verlaufen.

6. Antrieb nach einem der Ansprüche 1 bis 5, dadurch gekennzeichnet, daß der Schlitten (30) mit einer der radialen Querschnittsform des Antriebsprofiles (29 ; 60) entsprechenden Durchlaßöffnung (31) versehen ist.

7. Antrieb nach einem der Ansprüche 1 bis 6, dadurch gekennzeichnet, daß im mittleren Bereich 32 des Antriebsprofiles (29 ; 60) ein zylindrisches Rohr (33 ; 63) aus Edelstahl oder aus glasfaserverstärktem oder kohlefaserverstärktem Kunststoff axial angeordnet ist.

8. Antrieb nach einem der Ansprüche 1 bis 7, dadurch gekennzeichnet, daß im Antriebsprofil (29 ; 60) axial verlaufende weitere Bohrungen (45, 46) bzw. Rohre (64, 65) zum Durchführen von elektrischen Leitungen oder Druckmedien angeordnet sind.

9. Antrieb nach einem der Ansprüche 1 bis 8, dadurch gekennzeichnet, daß das Antriebsprofil (60) einen Mantel (61) aus glasfaserverstärktem oder kohlefaserverstärktem Kunststoff aufweist, dessen von Einbauten freier Innenraum mit einem Kunststoffschaum (66) ausgefüllt und/oder mit radialen Zwischenstegen versehen ist.

10. Antrieb nach einem der Ansprüche 1 bis 9, dadurch gekennzeichnet, daß das Antriebsprofil (29 ; 60) mit einer seitlichen Ausnehmung (48) versehen ist, in der ein Element einer Längenmeßeinrichtung angeordnet ist, das mit einem weiteren, am Schlitten (30) angeordneten Element zusammenwirkt.

11. Antrieb nach Anspruch 10, dadurch gekennzeichnet, daß in der Ausnehmung (48) ein linearer Glas-Meßstab (50) und am Schlitten (30) eine den Meßstab (50) vorzugsweise gabelartig umfassende optische Meßeinheit (49) angeordnet ist.

12. Antrieb nach einem der Ansprüche 10 oder 11, dadurch gekennzeichnet, daß die Ausnehmung (48) mit einer jalousieartigen Abdeckung (52) versehen ist, die sich beidseitig vom Schlitten (30) erstreckt und von diesem mitgenommen wird.

13. Antrieb nach einem der Ansprüche 1 bis 12, dadurch gekennzeichnet, daß eine Oberfläche (47) des Antriebsprofiles (29 ; 60) mit einer Bremse des Schlittens (30) zusammenwirkt.

14. Antrieb nach Anspruch 13, dadurch gekennzeichnet, daß die Oberfläche (47) eben ausgebildet ist und zwei Endbereiche (34) peripher verbindet.

**Claims**

1. A linear drive comprising a profiled drive section (11 ; 29 ; 60) extending along a longitudinal axis (10), a carriage (12 ; 30) running on the said section and drive means (14, 17, 19) effecting a relative axial movement between the said drive section (11 ; 29 ; 60) and carriage (12 ; 30), the carriage (12 ; 30) being seated on the drive section (11 ; 29 ; 60) via a roller bearing for linear motion, the rotational axes (38) of the roller means (37, 37a, 37b, 37c) extending perpendicularly to the longitudinal axis (10) of the linear drive (1) and the profiled drive section (11 ; 29 ; 60) having tracks for said roller means and extending in a longitudinal direction of said linear drive (1), characterized in the radial cross-section of the drive section (29 ; 60) having flange-like end portions (34) projecting in a star-like pattern from a central area (32) and being provided with surface portions (35) extending in a radial direction and defining the plane of the roller bearing.

2. The drive according to claim 1, characterized in that the drive section (29 ; 60) exhibits approximately the shape of an X.

3. The drive according to claim 2, characterized in that the sections (35) are offset relative to each other by approximately 90°.

4. The drive section according to claim 1, characterized in that the sections (35) are provided with hardened guide strips (36 ; 62), serving as tracks for the roller means (37, 37a, 37b, 37c).

5. The drive according to claim 4, characterized in that the carriage (30) is provided with roller means (37, 37a, 37b, 37c) whose axes of rotation (38) extend parallel to the guide strips (36 ; 62).

6. The drive according to any of claims 1 through 5, characterized in that the carriage (30) is provided with a passage opening (31) conforming in shape to the radial cross-sectional shape of the drive section (29 ; 60).

7. The drive according to any of claims 1 through 6, characterized in that a cylindrical tube (33 ; 63) of stainless steel or of a glass-reinforced or carbon-reinforced plastic material, or the like, is arranged axially in the central area (32) of the drive section (29 ; 60).

8. The drive according to any of claims 1 through 7, characterized in that the drive section (29 ; 60) is provided with axially extending additional bores (45, 46) and/or tubes (64, 65) to serve as passages for electric lines or pressure fluids.

9. The drive according to any of claims 1 through 8, characterized in that the drive section (60) is provided with a jacket (61) of a glass-reinforced or carbon-reinforced plastic material whose inner space, which is not occupied by any built-in items, is filled with plastic foam (66) and/or provided with radial cross-members.

10. The drive according to any of claims 1 through 9, characterized in that the drive section (29 ; 60) is provided with a lateral recess (48) accommodating one element of a linear measuring device which coacts with another element arranged on the carriage (30).

11. The drive according to claim 10, characterized in that the recess (48) accommodates a linear glass scale (50) and that an optical measuring unit (49) embracing the said scale practically in the manner of a fork is arranged on the carriage (30).

12. The drive according to claim 10 or 11, characterized in that the recess (48) is covered by a shutter-like cover (52) which extends on both sides of the carriage (30) and is entrained by the latter.

13. The drive according to any of claims 1 through 12, characterized in that one surface (47) of the drive section (29 ; 60) coacts with a brake on the carriage (30).

14. The drive according to claim 13, characterized in that the surface (47) is of level shape and interconnects two end portions (34) peripherally.

**Revendications**

1. Dispositif de commande linéaire, avec un profilé d'entraînement (11 ; 29 ; 60) s'étendant suivant un axe longitudinal (10), un chariot (12 ; 30) circulant sur celui-ci et des moyens d'entraînement (14 ; 17 ; 19), qui réalisent un déplacement relatif entre le profilé d'entraînement (11 ; 29 ; 60) et le chariot (12 ; 30) suivant la direction axiale, le chariot (12 ; 30) circulant sur le profilé d'entraînement 11 ; 29 ; 60) au moyen d'un système de roulement longitudinal, dans lequel les axes de rotation (38) des moyens de roulement (37, 37a, 37b, 37c) s'étendent transversalement à l'axe longitudinal (10) du dispositif de commande linéaire (1) et le profilé d'entraînement (11 ; 29 ; 60) présente des voies de circulation s'étendant suivant la direction longitudinale du dispositif de commande linéaire (1), pour les moyens de roulement, caractérisé en ce que le profilé d'entraînement (29 ; 60) présente une section transversale radiale dans laquelle à partir d'une zone médiane (32) s'écartent en étoile des zones terminales (34) semblables à des ailes, qui sont dotées de sections (35) s'étendant approximativement radialement, sur la surface desquelles sont réalisées les voies de circulation.

2. Dispositif de commande suivant la revendication 1, caractérisé en ce que le profilé d'entraînement (29 ; 60) présente une configuration approximativement en forme de X.

3. Dispositif de commande suivant la revendication 2. caractérisé en ce que les sections (35) s'étendent avec un décalage mutuel d'environ 90°.

4. Dispositif de commande suivant l'une des revendications 1 à 3, caractérisé en ce que les sections (35) sont munies de baguettes de guidage trempées (36 ; 62) comme voies de circulation pour les moyens de roulement (37, 37a, 37b, 37c).

5. Dispositif de commande suivant la revendication 4, caractérisé en ce que le chariot (30) est muni de galets (37, 37a à 37c), dont les axes de rotation s'étendent parallèlement aux baguettes de guidage (36 ; 62).

6. Dispositif de commande suivant l'une des revendications 1 à 5, caractérisé en ce que le chariot (30) est doté d'une ouverture de passage (31) correspondant à la forme en section transversale radiale du profilé d'entraînement (29 ; 60).

7. Dispositif de commande suivant l'une des revendications 1 à 6, caractérisé en ce que dans la zone médiane (32) du profilé d'entraînement (29 ; 60) est agencé axialement un tube cylindrique (33 ; 63) en acier spécial ou en matière synthétique renforcée par des fibres de verre ou des fibres de carbone.

8. Dispositif de commande suivant l'une des revendications 1 à 7, caractérisé en ce que dans le profilé d'entraînement (29 ; 60) sont agencés d'autres alésages (45, 46) ou tubes (64, 65) s'étendant axialement, pour le passage de câbles électriques ou d'agents de pression.

9. Dispositif de commande suivant l'une des revendications 1 à 8, caractérisé en ce que le profilé d'entraînement (60) présente une enveloppe (61) en matière synthétique renforcée par des fibres de verre ou des fibres de carbone, dont le volume interne exempt de garnitures, est rempli avec une mousse de matière synthétique (66) et/ou est muni d'entretoises intermédiaires radiales.

10. Dispositif de commande suivant l'une des revendications 1 à 9, caractérisé en ce que le profilé d'entraînement (29 ; 60) est doté d'un évidement latéral (48) dans lequel est agencé un élément d'un dispositif de mesure de longueur, qui coopère avec un autre élément agencé sur le chariot (30).

11. Dispositif de commande suivant la revendication 10, caractérisé en ce que dans l'évidement (48) est agencée une règle de mesure linéaire en verre (50) et sur le chariot une unité de mesure optique (49) entourant de préférence à la façon d'une fourche, la règle de mesure (50).

12. Dispositif de commande suivant l'une des revendications 10 ou 11, caractérisé en ce que l'évidement (48) est muni d'un recouvrement en forme de jalousie (52), qui s'étend de part et d'autre du chariot (30) et est emmené par celui-ci.

13. Dispositif de commande suivant l'une des revendications 1 à 12, caractérisé en ce qu'une surface (47) du profilé d'entraînement (29 ; 60) coopère avec un frein du chariot.

14. Dispositif de commande suivant la revendication 13, caractérisé en ce que la surface (47) est de réalisation plane et relie périphériquement deux zones terminales (34).

Fig. 1

Fig. 4

Fig. 2

Fig. 3